# EUROPÄISCHE PATENTANMELDUNG

(11) **EP 1 860 903 A1**
(43) Veröffentlichungstag der Anmeldung: **28.11.2007**
(21) Anmeldenummer: 06010859.4
(22) Anmeldetag: 26.05.2006
(51) Int. Cl.: H04Q 7/38

(54) **Verfahren zur Steuerung einer Funkzellenüberwachung**

(71) Anmelder: NOKIA SIEMENS NETWORKS GMBH & CO. KG, 81541 München (DE)
(72) Erfinder: Breuer, Volker, 16727 Bötzow (DE); Färber, Michael, 82515 Wolfratshausen (DE); Lamprecht, Frank, 10439 Berlin (DE)

(57) **Zusammenfassung**

Die Erfindung betrifft ein Verfahren zur Steuerung einer Funkzellenüberwachung, bei dem eine einheitliche Funkzellenliste (FZL) von einer netzseitigen Einrichtung aus, die einer betrachteten Funkzelle zugeordnet ist, gesendet wird. In der Funkzellenliste (FZL) werden Funkzellen, die zur betrachteten Funkzelle benachbart sind, aufgeführt, wobei empfangende Funkkommunikationsendgeräte anhand der Funkzellenliste (FZL) Signale der benachbarten Funkzellen durch Messung für einen Handover oder eine Cell-Reselection überwachen. Die jeweiligen Messungen der Funkkommunikationsendgeräte werden an die netzseitige Einrichtung übermittelt.

Jeder Funkzelle der Funkzellenliste (FZL) wird netzseitig eine Priorität (Prio1, Prio2) zugeordnet. Zusätzlich wird jeder Funkzelle der Funkzellenliste (FZL) netzseitig zumindest eine Anzeige (DKA1, DKA2, DKA3) zugeordnet, die angibt, welcher Dienst innerhalb der jeweiligen Funkzelle zur Abwicklung angeboten wird. Ein empfangendes Funkkommunikationsendgerät überwacht zur Durchführung eines Dienstes in Abhängigkeit der signalisierten Priorität (Prio1, Prio2) und in Abhängigkeit der signalisierten Dienstanzeige (DKA1, DKA2, DKA3) lediglich eine begrenzte Anzahl der in der Funkzellenliste (FZL) angegebenen Funkzellen durch Messung.

## Beschreibung

Die Erfindung betrifft ein Verfahren zur Steuerung einer Funkzellenüberwachung gemäß dem Oberbegriff des Patentanspruchs 1.

Bei einem Funkkommunikationssystem wird seitens einer Basisstation eine Funkzellenliste gesendet, um ein empfangendes Funkkommunikationsendgerät zu veranlassen, Messungen von Signalen benachbarter Funkzellen vorzunehmen.

Basierend auf diesen Messungen - die im allgemeinen an eine Netzseite zurück signalisiert werden - kann dann eine als "Handover" bezeichnete Verbindungsübergabe zwischen Funkzellen oder eine als "Cell-Reselection" bezeichnete Umorganisation von Funkübertragungsressourcen zwischen Funkzellen veranlasst werden.

Bei einem GSM-Funkkommunikationssystem wird beispielsweise eine Funkzellenliste von einer Basisstation einer betrachteten Funkzelle rundgesendet (BCCH; System Information 2)und kann von den der Funkzelle zugeordneten Funkkommunikationsendgeräten empfangen werden. Die Funkzellenliste ist für die Funkkommunikationsendgeräte in einem einheitlichen Format gestaltet und vom Status der angesprochenen Funkkommunikationsendgeräte abhängig. Unter Status wird hier der als "Idle-Mode" bezeichnete Bereitschaftszustand des Funkkommunikationsendgeräts bzw. der als "Connected-Mode" bezeichnete Verbindungszustand des Funkkommunikationsendgeräts bezeichnet. Im Connected-Mode wird der assoziierte Datenkanal (SACCH; Systeminformation 5) zur Übertragung der Funkzellenliste verwendet.

Eine GSM-Funkzellenliste beinhaltet typischerweise bis zu 32 benachbarte Funkzellen, die für einen Handover bzw. für eine Cell-Reselection von einem betrachteten Funkkommunikationsendgeräts überwacht werden müssen. Die im "Idle"- oder "Connected"-Mode verwendeten Listen haben gleiches Format, können jedoch gleichen oder unterschiedlichen Inhalt haben.

Bei einem WCDMA-Funkübertragungsverfahren werden Funkzellenlisten verwendet, die vom Status der angesprochenen Funkkommunikationsendgeräte abhängig sind. Für Funkkommunikationsendgeräte, die im "Idle-Mode" sind, wird eine erste Funkzellenliste rundgesendet.

Im Gegensatz dazu wird an jedes einzelne Funkkommunikationsendgerät im "Connected-Mode" eine eigene, zweite Funkzellenliste über einen zugewiesenen Datenkanal übertragen.

Bereits jetzt werden mehrere Funkkommunikationssysteme nebeneinander betrieben, wobei vorteilhafterweise eine Basisstation bzw. ein NodeB bzw. ein Netzzugangspunkt verwendet wird, die jeweilige Funkübertragungsverfahren der unterschiedlichen Funkkommunikationssysteme abwickeln kann.

Wird beispielsweise ein GSM-Funkkommunikationssystem parallel zu einem WCDMA-Funkkommunikationssystem in einem räumlichen Bereich verwendet bzw. zur Verfügung gestellt, muss die Basisstation bzw. NodeB eine entsprechend umfangreiche Funkzellenliste für Dual-Mode-Funkkommunikatiorisendgeräte zur Verfügung stellen, die zur Abwicklung von Funkübertragungen mehrerer Funkübertragungsstandards ausgebildet sind.

Eine derartige GSM-WCDMA-Funkzellenliste kann typischerweise 32 WCDMA-Intrafrequenz-Nachbarzellen, 32 WCDMA-Interfrequenz-Nachbarzellen, 32 GSM-Nachbarzellen sowie 32 TDD-Nachbarzellen aufweisen.

Basierend auf dieser umfangreichen Funkzellenliste muss dann ein empfangendes Funkkommunikationsendgerät jeweilige Messungen von Signalen benachbarter Funkzellen mit einem großen Aufwand an Zeit und an Signalisierungen ausführen, um gegebenenfalls einen netzseitig gesteuerten Handover durchführen zu können.

Es ist daher Aufgabe der vorliegenden Erfindung, ein Verfahren zur Steuerung einer Funkzellenüberwachung anzugeben, das insbesondere bei parallel betriebenen Funkkommunikationssystemen mit geringem Aufwand durchführbar ist.

Diese Aufgabe wird durch die Merkmale des Patentanspruchs 1 gelöst. Vorteilhafte Weiterbildungen sind in den Unteransprüchen angegeben.

Beim erfindungsgemäßen Verfahren zur Steuerung einer Funkzellenüberwachung wird eine einheitliche Funkzellenliste von einer netzseitigen Einrichtung aus, die einer betrachteten Funkzelle zugeordnet ist, gesendet oder rundgesendet. In der Funkzellenliste werden Funkzellen, die zur betrachteten Funkzelle benachbart sind, aufgeführt, wobei empfangende Funkkommunikationsendgeräte anhand der Funkzellenliste Signale der benachbarten Funkzellen durch Messung für einen Handover oder eine Cell-Reselection überwachen. Die jeweiligen Messungen der Funkkommunikationsendgeräte werden an die netzseitige Einrichtung übermittelt.

Erfindungsgemäß wird jeder Funkzelle der Funkzellenliste netzseitig eine Priorität zugeordnet. Zusätzlich wird jeder Funkzelle der Funkzellenliste netzseitig zumindest eine Anzeige zugeordnet, die angibt, welcher Dienst innerhalb der jeweiligen Funkzelle zur Abwicklung angeboten wird. Ein empfangendes Funkkommunikationsendgerät überwacht zur Durchführung eines Dienstes in Abhängigkeit der signalisierten Priorität und in Abhängigkeit der signalisierten Dienstanzeige lediglich eine begrenzte Anzahl der in der Funkzellenliste angegebenen Funkzellen durch Messung.

Beim erfindungsgemäßen Verfahren wird aufgrund der zugeordneten Priorität und Dienstanzeige innerhalb der Funkzellenliste seitens des Funkkommunikationsendgeräts eine Auswahl von mit Priorität zu überwachenden Funkzellen und damit eine schnelle Durchführung der jeweiligen Überwachungsmessungen ermöglicht.

Relevante Messwerte ausgewählter Funkzellen können somit schnell erfasst und zur Netzseite signalisiert werden, um dort nach erfolgter Bewertung gegebenenfalls einen Handover bzw. eine Cell-Reselection zu veranlassen.

Alternativ kann das Funkkommunikationsendgerät einen Handover oder eine Cell-Reselection auf Basis dieser Messwerte autonom initiieren.

Beim erfindungsgemäßen Verfahren wird unabhängig vom Status des Funkkommunikationsendgeräts eine einheitliche und umfassende Funkzellenliste an alle empfangenden Funkkommunikationsendgeräte gesendet übertragen. Die Analyse der Funkzellenliste bezüglich der mit Priorität vorzunehmenden Messungen sowie die Rückmeldung der Messwerte kann durch die vorteilhafte Einteilung der Funkzellenliste beschleunigt werden.

Seitens der netzseitig sendenden Basisstation bzw. NodeB erfolgt eine Festlegung des Inhalts der Funkzellenliste sowie eine Priorisierung der benachbarten Funkzellen innerhalb der Funkzellenliste.

Ein empfangendes Funkkommunikationsendgerät führt dann in Abhängigkeit vom eigenen Status bzw. vom abzuwickelnden Dienst auf intelligente Weise eine begrenzte Zahl an Messungen zur Funkzellenüberwachung durch.

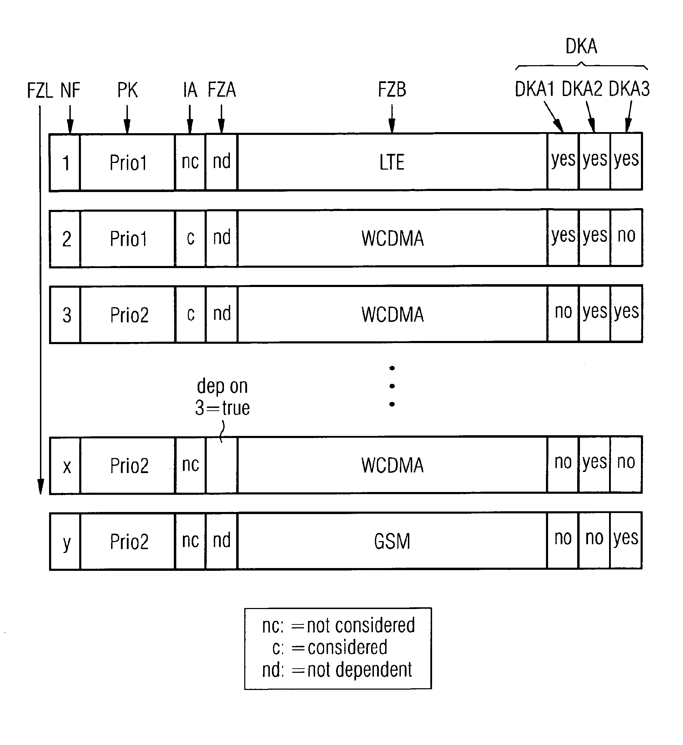

Nachfolgend wird die Erfindung anhand einer Zeichnung näher erläutert. Dabei zeigt FIG 1 eine Funkzellenliste FZL, die beim erfindungsgemäßen Verfahren zur Funkzellenüberwachung verwendet wird.

Die Funkzellenliste FZL umfasst hier insgesamt y Zeilen bzw. Funkzelleneinträge. Jede Zeile beinhaltet somit Angaben zu einer dem Nummernfeld NF eindeutig zugeordneten Funkzelle, die Funkzelle kann also über das Nummernfeld eindeutig adressiert werden. Das Nummernfeld NF bildet innerhalb der Funkzellenliste FZL eine erste Spalte.

Eine zweite Spalte der Funkzellenliste FZL beinhaltet eine Prioritätsklasse PK, so dass jeder Funkzelle eine Priorität zugeordnet werden kann.

Für den Fall, dass mehrere Funkzellen in der jeweils zugeordneten Prioritätsklasse PK im Wert übereinstimmen, kann über das Nummernfeld eine weitere Steuerung eines Messablaufs zur Funkzellenüberwachung erfolgen. Beispielsweise werden Messungen in aufsteigender Nummernfolge des Nummernfeldes NF bei gleich bleibendem Wert der Prioritätsklasse PK durchgeführt.

So beginnt ein Funkkommunikationsendgerät, das eine Auswahl anhand der Prioritätsklasse PK getroffen hat, anhand der aufsteigenden Nummernfolge mit der Funkzellenüberwachung der der Nummernfolge NF zugeordneten Funkzellen.

Eine dritte Spalte der Funkzellenliste FZL beinhaltet eine Idle-Anzeige IA. Mit dieser kann markiert werden,
- ob die über die Nummernfolge NF definierte Funkzelle nur durch ein Funkkommunikationsendgerät, das sich im "Idle-Mode" befindet, überwacht werden soll, oder
- ob die über die Nummernfolge NF definierte Funkzelle nur durch ein Funkkommunikationsendgerät, das sich im "Connected-Mode" befindet, überwacht werden soll, oder ob die über die Nummernfolge NF definierte Funkzelle durch ein Funkkommunikationsendgerät unabhängig davon überwacht werden soll, ob es sich im "Connected-Mode" oder im "Idle-Mode" befindet.

Diese Idle-Anzeige IA ist insbesondere für eine vorzunehmende Cell-Reselection bedeutend.

Ein Funkkommunikationsendgerät kann auch im "Idle-Mode" temporär bevorzugt die für den "Connected-Mode" definierten Zellen bzw. Funkzellen beobachten. Datendienste, die im Hintergrund abgewickelt werden und die hohe Datenvolumina übertragen, lösen häufig die physikalische Verbindung auf, so dass das Funkkommunikationsendgerät im "Idle-Mode" ist. Jedoch besteht für den abzuwickelnden Dienst noch eine logische Verbindung, ein sogenannter "PDP-Kontext" ist noch vorhanden.

Wenn ein hohes Datenvolumen übertragen werden soll und kein weiterer Dienst aktuell ist bzw. anliegt, wird die physikalische Verbindung wieder hergestellt. Im Falle eines noch vorhandenen, "lebenden" Kontextes und einer Cell-selection, die auf Messungen der "Connected-Mode" Funkzellenliste beruht, kann davon ausgegangen werden, dass bei einer Wiederherstellung der physikalischen Verbindung das Funkkommunikationsendgerät eine Funkzelle selektiert hat, die einen hinreichenden Radioträger zur Verfügung stellen kann.

Die Bereitstellung der Idle-Anzeige IA lässt also optionale Möglichkeiten offen, in welcher Form im "Idle-Mode" Messungen ausgeführt werden sollen bzw. ausgeführt werden können.

Eine vierte Spalte der Funkzellenliste FZL beinhaltet eine Funkzellenanzeige FZA. Mit dieser kann markiert werden, ob es sich um eine als "dependent" bezeichnete, abhängige Funkzelle oder um eine als "not dependent" bezeichnete unabhängige Funkzelle handelt.

Dabei wird unter dem Begriff "abhängige Funkzelle" eine Pico-Funkzelle oder eine Micro-Funkzelle verstanden, die räumlich quasi "unter" einer als "umbrella" bezeichneten Funkzelle liegen und die aufgrund dieser Tatsache nur dann zu überwachen sind, wenn die "umbrella" Funkzelle beispielsweise mit einer bestimmten Feldstärke gemessen werden konnte.

Diese Funkzellenanzeige FZA ist wichtig, damit seitens des empfangenden Funkkommunikationsendgeräts entsprechende Micro-Funkzellenmessungen bzw. Pico-Funkzellenmessungen durchgeführt werden können. Die als "umbrella" bezeichnete Funkzelle dient hier als Indikator, dass "abhängige" Funkzellen als Kandidaten für einen Handover und/oder für eine Cell-Reselection in Frage kommen.

Beispielhaft kann das Funkkommunikationsendgerät unter bestimmten, vom Netzwerk zusätzlich signalisierten Bedingungen abhängige Zellen in die Funkzellenüberwachung einschließen oder ausschließen.

Eine fünfte Spalte der Funkzellenliste FZL beinhaltet eine Funkzellenbeschreibung FZB, die den Funkübertragungsstandard angibt, der in der durch das Nummernfeld NF definierten Funkzelle verwendet wird.

Beispielsweise wird hier signalisiert, ob die zu überwachende Funkzelle eine GSM-, eine WCDMA- oder eine "Long Term Evolution, LTE"-Funkübertragung des Standards 3GPP verwendet.

Drei weitere Spalten beinhalten Angaben DKA zu Diensten bzw. zu Dienstklassen, die seitens der Funkzelle angeboten werden bzw. die dort übertragen werden können. Diese Angaben werden innerhalb der Funkzellenliste als Dienstklasse-Anzeigen DKA1 bis DKA3 bezeichnet.

Die Diensteklasse-Anzeigen DKA1 bis DKA3 bilden ein wichtiges Element der Erfindung, da mit deren Hilfe eine schnelle Auswahl an erforderlichen Messungen seitens des Funkkommmunikationsendgeräts ermöglicht wird.

So muss ein Funkkommmunikationsendgerät im "Connected-Mode" nur diejenigen benachbarten Funkzellen überwachen, die einen vom Funkkommmunikationsendgerät übertragenen bzw. angeforderten Dienst überhaupt anbieten bzw. abwickeln können.

Mit anderen Worten wird es mit Hilfe der drei Diensteklasse-Anzeigen DKA1 bis DKA3 ermöglicht, die zu überwachenden Funkzellen seitens des Funkkommunikationsendgeräts einzuschränken.

In einer vorteilhaften Weiterbildung der vorliegenden Erfindung wird die Funkzellenliste für alle betroffenen Funkkommunikationsendgeräte durch eine betrachtete Basisstation beispielsweise über einen BCH-Funkübertragungskanal gesendet bzw. rundgesendet.

Nicht ausgeschlossen bleibt die Möglichkeit, im Rahmen einer weitergehenden Optimierung zusätzlich zur gesendeten bzw. rundgesendeten Funkzellenliste im "Connected-Mode" eine weitere, in gleicher Form gestaltete Liste mit unterschiedlichem Inhalt zu senden. Dies kann beispielsweise über einen assoziierten Datenkanal an das Funkkommunikationsendgerät erfolgen.

Diese würde dann die rundgesendete Funkzellenliste ersetzen und die Möglichkeit einer noch spezifischeren Prioritätsstrukturierung erlauben. Diese Option kann bei bestimmten Kombinationen von Eigenschaften des Funkkommunikationsendgeräts und Dienstklasse-Anforderungen zu einem optimierten Betrieb führen. Beispielsweise könnten Nachbarzell-Beobachtungsanforderungen deutlich eingeschränkt werden, um mehr Nutzdaten übertragen zu können.

Für den Fall unterschiedlicher Systemstrukturen, zum Beispiel zeitlicher Rahmenstrukturen der verschiedenen Systeme, oder durch Begrenzungen der im Funkkommunikationsendgerät implementierten Prozessoren und Software-Sequenzen könnte es zu Situationen kommen, bei denen das Funkkommunikationsendgerät innerhalb einer geforderten Zeitspanne nicht alle geforderten Nachbarfunkzellen vornehmen kann. In diesem Fall werden nicht gemessene Funkzellen im zurückgemeldeten Messbericht mit einer "ungültig" Markierung versehen.

Stellt nun das Funknetz innerhalb einer implementierten Ressourcen-Management-Funktion fest, dass Messungen dieser Funkzellen benötigt werden, kann durch eine über den assoziierten Datenkanal übertragene, spezielle Funkzellenliste eine entsprechende Verschiebung der zugeordneten Prioritäten erfolgen, so dass die Messungen durchgeführt und zurückgemeldet werden - um letztlich die Anforderungen der Ressourcen-Management-Funktion zu erfüllen.

Nachfolgend werden die in FIG 1 dargestellten Einträge der Funkzellenlist FZL beispielhaft erläutert.

### Für das Nummernfeld NF=1 gilt:

Eine erste Funkzelle ist durch das Nummernfeld NF=1 definiert. Die erste Funkzelle ist einer ersten Prioritätsklasse PK=Prio1 zugeordnet.

Die Idle-Anzeige IA=nc (für "not considered") signalisiert, dass die erste Funkzelle von Funkkommunikationsendgeräten im Idle-Mode nicht überwacht werden soll bzw. nicht benutzt werden soll.

Die Funkzellenanzeige FZA ist hier mit FZA=nd (für "not dependent") belegt und signalisiert, dass die zweite Funkzelle weder Micro- noch Pico-Funkzelle ist.

Die Funkzellenbeschreibung FZB=LTE signalisiert, dass die erste Funkzelle einem LTE-Funkkommunikationssystem zugeordnet ist.

Die Diensteklasse-Anzeigen DKA1=yes, DKA2=yes und DKA3=yes signalisieren, dass innerhalb der ersten Funkzelle drei Dienste zur Verfügung stehen bzw. abgewickelt werden können - beispielsweise als erster Dienst eine EDCH-Datenübertragung, als zweiter Dienst eine HSDPA-Datenübertragung und als dritter Dienst eine Sprach-Datenübertragung.

### Für das Nummernfeld NF=2 gilt:

Eine zweite Funkzelle ist durch das Nummernfeld NF=2 definiert. Die zweite Funkzelle ist der ersten Prioritätsklasse PK=Prio1 zugeordnet.

Die Idle-Anzeige IA=c (für "considered") signalisiert, dass die zweite Funkzelle von Funkkommunikationsendgeräten im Idle-Mode überwacht werden soll bzw. benutzt werden kann.

Die Funkzellenanzeige FZA=nd (für "not dependent") signalisiert, dass die zweite Funkzelle weder Micro- noch Pico-Funkzelle ist.

Die Funkzellenbeschreibung FZB=WCDMA signalisiert, dass die Funkzelle einem WCDMA-Funkkommunikationssystem zugeordnet ist.

Die Diensteklasse-Anzeigen DKA1=yes, DKA2=yes und DKA3=no signalisieren, dass innerhalb der Funkzelle eine EDCH-Datenübertragung und eine HSDPA-Datenübertragung jedoch keine Sprach-Datenübertragung abgewickelt werden kann.

### Für das Nummernfeld NF=3 gilt:

Eine dritte Funkzelle ist durch das Nummernfeld NF=3 definiert. Die dritte Funkzelle ist einer zweiten Prioritätsklasse PK=Prio2 zugeordnet.

Die Idle-Anzeige IA=c (für "considered") signalisiert, dass die dritte Funkzelle von Funkkommunikationsendgeräten im Idle-Mode überwacht werden soll bzw. im Falle eines Handovers benutzt werden kann.

Die Funkzellenanzeige FZA=nd (für "not dependent") signalisiert, dass die dritte Funkzelle weder Micro- noch Pico-Funkzelle ist.

Die Funkzellenbeschreibung FZB=WCDMA signalisiert, dass die Funkzelle einem WCDMA-Funkkommunikationssystem zugeordnet ist.

Die Diensteklasse-Anzeigen DKA1=no, DKA2=yes und DKA3=yes signalisieren, dass innerhalb der Funkzelle keine EDCH-Datenübertragung jedoch eine HSDPA-Datenübertragung und eine Sprach-Datenübertragung abgewickelt werden kann.

### Für das Nummernfeld NF=x gilt:

Eine vorletzte Funkzelle ist durch das Nummernfeld NF=x definiert. Die vorletzte Funkzelle ist der zweiten Prioritätsklasse PK=Prio2 zugeordnet.

Die Idle-Anzeige IA=nc (für "not considered") signalisiert, dass die vorletzte Funkzelle von Funkkommunikationsendgeräten im Idle-Mode nicht überwacht werden muss bzw. nicht benutzt werden kann.

Die Funkzellenanzeige FZA="dep on 3 = true" (für "dependent on Funkzelle Nr.3 = true") signalisiert, dass die vorletzte Funkzelle beispielsweise eine Micro- oder eine Pico-Funkzelle innerhalb eines Abdeckungsbereiches der dritten Funkzelle ist.

Die Funkzellenbeschreibung FZB=WCDMA signalisiert, dass die vorletzte Funkzelle einem WCDMA-Funkkommunikationssystem zugeordnet ist.

Die Diensteklasse-Anzeigen DKA1=no, DKA2=yes und DKA3=no signalisieren, dass innerhalb der Funkzelle keine EDCH-Datenübertragung und keine Sprach-Datenübertragung jedoch eine HSDPA-Datenübertragung abgewickelt werden kann.

### Für das Nummernfeld NF=y gilt:

Eine letzte Funkzelle ist durch das Nummernfeld NF=y definiert. Die letzte Funkzelle ist der zweiten Prioritätsklasse PK=Prio2 zugeordnet.

Die Idle-Anzeige IA=nc (für "not considered") signalisiert, dass die letzte Funkzelle von Funkkommunikationsendgeräten im Idle-Mode nicht überwacht werden muss bzw. für einen Handover nicht benutzt werden kann.

Die Funkzellenanzeige FZA=nd (für "not dependent") signalisiert, dass die letzte Funkzelle weder Micro- noch Pico-Funkzelle einer anderen Funkzelle ist.

Die Funkzellenbeschreibung FZB=GSM signalisiert, dass die letzte Funkzelle einem GSM-Funkkommunikationssystem zugeordnet ist.

Die Diensteklasse-Anzeigen DKA1=no, DKA2=no und DKA3=yes signalisieren, dass innerhalb der Funkzelle keine EDCH-Datenübertragung und keine HSDPA, jedoch eine Sprach-Datenübertragung abgewickelt werden kann.

Für den Fall der übereinstimmenden Prioritätsklasse PK=Prio1 der ersten und der zweiten Funkzelle beginnt - aufgrund der aufsteigenden Nummernfolge NF - ein empfangendes Funkkommunikationsendgerät zuerst mit Messungen der ersten und dann der zweiten Funkzelle unter der Voraussetzung, dass seitens des Funkkommunikationsendgeräts eine EDCH-Datenübertragung oder eine HSDPA-Datenübertragung erfolgt oder gewünscht wird.

Entsprechend würde ein Funkkommunikationsendgerät im Idle-Mode, das der ersten LTE-Funkzelle mit der Nummernfolge NF=1 zugeordnet ist, nur die zweite (NF=2) und die dritte (NF=3) Funkzelle als geeignete Kandidaten für einen möglichen Handover oder für eine mögliche Cell-Reselection durch Messung überwachen.

Ein Funkkommunikationsendgerät, das eine Datenübertragung empfängt, würde zur Durchführung einer Sprachdatenübertragung aufgrund der höchsten Prioritätsklasse PK zuerst die erste Funkzelle (NF=1) durch Messung überwachen.

## Patentansprüche

1. Verfahren zur Steuerung einer Funkzellenüberwachung,
- bei dem eine einheitliche Funkzellenliste (FZL) von einer netzseitigen Einrichtung aus, die einer betrachteten Funkzelle zugeordnet ist, gesendet wird,
- bei dem in der Funkzellenliste (FZL) Funkzellen, die zur betrachteten Funkzelle benachbart sind, aufgeführt werden,
- bei dem empfangende Funkkommunikationsendgeräte anhand der Funkzellenliste (FZL) Signale der benachbarten Funkzellen durch Messung für einen Handover oder eine Cell-Reselection überwachen,
- bei dem jeweilige Messungen der Funkkommunikationsendgeräte an die netzseitige Einrichtung übermittelt werden,
**dadurch gekennzeichnet,**
- **dass** jeder Funkzelle der Funkzellenliste (FZL) netzseitig eine Priorität (Prio1, Prio2) zugeordnet wird,
- **dass** jeder Funkzelle der Funkzellenliste (FZL) netzseitig zusätzlich zumindest eine Anzeige (DKA1, DKA2, DKA3) zugeordnet wird, die angibt, welcher Dienst innerhalb der jeweiligen Funkzelle zur Abwicklung angeboten wird,
- **dass** ein empfangendes Funkkommunikationsendgerät zur Durchführung eines Dienstes in Abhängigkeit der signalisierten Priorität (Prio1, Prio2) und in Abhängigkeit der signalisierten Dienstanzeige (DKA1, DKA2, DKA3) lediglich eine begrenzte Anzahl der in der Funkzellenliste (FZL) angegebenen Funkzellen durch Messung überwacht.

2. Verfahren nach Anspruch 1, **dadurch gekennzeichnet, dass** jeder Funkzelle der Funkzellenliste (FZL) netzseitig eine laufende Nummer (NF) zugeordnet wird, um eine weitere Unterteilung zwischen Funkzellen gleicher Prioritätsklasse vorzunehmen.

3. Verfahren nach Anspruch 1 oder 2, **dadurch gekennzeichnet, dass** jeder Funkzelle der Funkzellenliste (FZL) netzseitig eine weitere Anzeige (IA) zugeordnet wird, die angibt,
- ob eine Funkzelle nur durch ein Funkkommunikationsendgerät im Idle-Mode überwacht werden soll, oder
- ob eine Funkzelle nur durch ein Funkkommunikationsendgerät im Connected-Mode überwacht werden soll, oder
- ob eine Funkzelle stets überwacht werden soll, unabhängig vom Status Connected-Mode oder Idle-Mode.

4. Verfahren nach Anspruch 3, **dadurch gekennzeichnet,**
- **dass** ein Funkkommunikationsendgerät im Idle-Mode die weitere Anzeige (IA) dazu verwendet, um bei einem noch bestehenden logischen Kontext einer Datenverbindung, deren physikalische Verbindung aufgelöst ist und die zur Übertragung eines hohen Datenvolumens verwendet werden soll, nur diejenigen Funkzellen überwacht, die durch die weitere Anzeige (IA) für den Connected-Mode qualifiziert sind,
- **dass** die Überwachung solange erfolgt, bis eine zugeordnete Lebensdauer des logischen Kontexts erlischt.

5. Verfahren nach einem der vorhergehenden Ansprüche, **dadurch gekennzeichnet, dass** jeder Funkzelle der Funkzellenliste (FZL) netzseitig eine Funkzellenanzeige (FZA) zugeordnet wird, die signalisiert, ob die Funkzelle eine Micro- oder eine Pico-Funkzelle innerhalb einer anderen Funkzelle der Funkzellenliste ist.

6. Verfahren nach einem der vorhergehenden Ansprüche, **dadurch gekennzeichnet, dass** jeder Funkzelle der Funkzellenliste (FZL) netzseitig eine Funkzellenbeschreibung (FZB) zugeordnet wird, die signalisiert, welches Funkübertragungsverfahren (WCDMA, GSM, 3GPP-LTE) innerhalb der Funkzelle verwendbar ist.

7. Verfahren nach einem der vorhergehenden Ansprüche, **dadurch gekennzeichnet, dass** durch die Funkzellenliste alle verfügbaren benachbarten Funkzellen mit jeweils zugeordneten Funkübertragungsverfahren gesendet werden.

8. Verfahren nach einem der vorhergehenden Ansprüche, **dadurch gekennzeichnet,**
- **dass** an das Funkkommunikationsendgerät zusätzlich zur gesendeten ersten Funkzellenliste eine weitere Funkzellenliste gleicher Form über einen assoziierten Datenkanal übertragen wird,
- wobei im Fall unterschiedlicher Inhalte der Funkzellenlisten die über den assoziierten Datenkanal übertragene, weitere Funkzellenliste die gesendete erste Funkzellenliste ersetzt.

9. Verfahren nach einem der vorhergehenden Ansprüche, **dadurch gekennzeichnet, dass** das empfangende Funkkommunikationsendgerät eine auf den Angaben zu jeder Funkzelle basierende begrenzte Anzahl der in der Funkzellenliste (FZL) angegebenen Funkzellen durch Messung überwacht.

10. Funkkommunikationsendgerät mit Mitteln zur Durchführung des Verfahrens nach einem der Ansprüche 1 bis 9.

11. Netzeinrichtung, mit Mitteln zur Erstellung und Übertragung einer Funkzellenliste, wobei die Funkzellenliste zur Steuerung einer Funkzellenüberwachung nach einem der Ansprüche 1 bis 9 ausgebildet ist.
